# EUROPEAN PATENT SPECIFICATION

(11) **EP 3 141 297 B1**
(45) Date of publication and mention of the grant of the patent: **05.09.2018**
(21) Application number: 16187972.1
(22) Date of filing: 09.09.2016
(51) Int. Cl.: B01F 3/04, B01F 5/04, B01F 5/06, F01N 3/20

(54) **EXHAUST GAS TREATEMENT DEVICE FOR AN EXHAUST SYSTEM OF AN INTERNAL COMBUSTION ENGINE**
ABGASBEHANDLUNGSVORRICHTUNG FÜR EINE ABGASANLAGE EINER BRENNKRAFTMASCHINE
DISPOSITIF DE TRAITEMENT DE GAZ D'ÉCHAPPEMENT POUR SYSTÈME D'ÉCHAPPEMENT D'UN MOTEUR À COMBUSTION INTERNE

(30) Priority: 10.09.2015 IT UB20153526
(43) Date of publication of application: 15.03.2017
(73) Proprietor: Magneti Marelli S.p.A., 20011 Corbetta (MI) (IT)
(72) Inventor: MILANI, Emanuele, 13876 SANDIGLIANO (IT); PAGLIANO, Pierangelo, 10024 MONCALIERI (IT); GAMBAROTTO, Massimiliano, 10147 TORINO (IT); ETTORRE, Daniele, 20123 MILANO (IT)
(74) Representative: Maccagnan, Matteo

(56) References cited:
- EP-A1- 2 823 880
- US-A1- 2013 216 442

## Description

### TECHNICAL FIELD

The present invention concerns an exhaust gas treatment device for an exhaust system of an internal combustion engine.

### PRIOR ART

International regulations concerning the reduction of the emission of polluting gases from cars provide a very low limit for the NOₓ molecules that may be released into the atmosphere.

Compliance with these limits is particularly critical, especially for Diesel engines; for this reason, it has been suggested to provide a Diesel engine exhaust system with a further SCR (Selective Catalytic Reduction) catalyst for NOₓ to convert the NOₓ (NO₂ or NO) molecules into nitrogen (N₂), which is an inert gas, and water (H₂0). The reduction reaction of the NOₓ molecules in nitrogen (N₂) is difficult without using a suitable reducing agent, which has been generally identified in ammonia (NH₃). The reducing agent must be injected in the exhaust system and upstream of the SCR catalyst to mix with the exhaust gas before entering the SCR catalyst.

However, storing ammonia inside a car is inadvisable for obvious safety reasons related to the fact that ammonia is toxic. Consequently, it has been proposed the storing and injecting of an aqueous urea solution, since urea decomposes into ammonia because of the heat of the exhaust gas and partly also because of a catalytic effect.

A problem related to the injection of an aqueous urea solution into the exhaust system is due to the fact that the urea decomposition also results in the formation of isocyanic acid (HNCO), which could thicken and then polymerize and deposit on the inner walls of the exhaust system, thus forming solid encrustations. Furthermore, also the urea deposited on the inner walls of the exhaust system can form solid deposits, which in turn form hardly removable solid encrustations.

In order to prevent the polymerization of the isocyanate produced by urea decomposition, it has been proposed to include a mixer in the exhaust system, close to the urea injection zone. By creating a certain turbulence in the exhaust gas, the mixer prevents the localized densification of isocyanic acid and therefore the polymerization of isocyanate. Obviously, the presence of a mixer creating a certain turbulence in the exhaust gas immediately before the inlet of the exhaust gas in the SCR catalyst also increases the efficiency of the SCR catalyst, as it makes more homogeneous the dispersion of the reductant (namely of the ammonia) in the exhaust gas.

The EP1514591A1 patent application describes a mixer provided in an exhaust gas treatment device immediately upstream of a SCR catalytic converter, which receives the hot exhaust gas mixed with reductants. Analogously, patent applications EP1022048A1, DE10060808A1, WO0107763A1, WO9913972A1, WO9905402A1, WO9905401A1, EP1748162A1, DE10248294A1, WO0009869A1, WO2005073524A1, WO0112301A1, EP0526392A1, and EP0894523A1 describe exhaust systems equipped with mixers close to reductant injectors.

The patent application US2013216442A1 describes an exhaust gas treatment device for an exhaust system of an internal combustion engine, in accordance with the preamble of claim 1. The treatment device comprises a tubular housing having a longitudinal central axis and a static mixer, which is arranged in the tubular housing and comprises a helical element, which is helically twisted about the longitudinal central axis and comprises three rows of mutually spaced through holes. The tubular housing is coupled to a urea injector that injects the urea in the central portion of the helical element.

The EP2823880A1 patent application describes an exhaust gas treatment device for an exhaust system of an internal combustion engine. The treatment device comprises a tubular housing having a longitudinal central axis and a static mixer, which is arranged in the tubular housing and comprises a helical element, which is helically twisted about the longitudinal central axis and includes several through holes, unevenly arranged and mutually spaced.

However, the known mixers of the aforesaid type have the drawback of not providing an optimal balance between the conflicting requirements relating to efficacy (i.e. ensuring an adequate mixing of the exhaust gas) and efficiency (i.e. limiting the load losses in the exhaust gas). In other words, the known mixers of the aforesaid type either have a low efficacy (i.e. they do not guarantee an adequate mixing of the exhaust gas) or a low efficiency (i.e. they cause high load losses in the exhaust gas).

### DESCRIPTION OF THE INVENTION

The object of the present invention is to provide an exhaust gas treatment device for an exhaust system of an internal combustion engine, said treatment device being free from the aforesaid drawbacks and, in particular, being easy and inexpensive to manufacture.

According to the present invention, it is provided an exhaust gas treatment device for an exhaust system of an internal combustion engine as claimed by the appended claims.

### BRIEF DESCRIPTION OF THE DRAWINGS

The present invention will now be described with reference to the accompanying drawings showing a non-limiting embodiment, in which:
- Figure 1 is a schematic view of an exhaust gas treatment device manufactured according to the present invention;

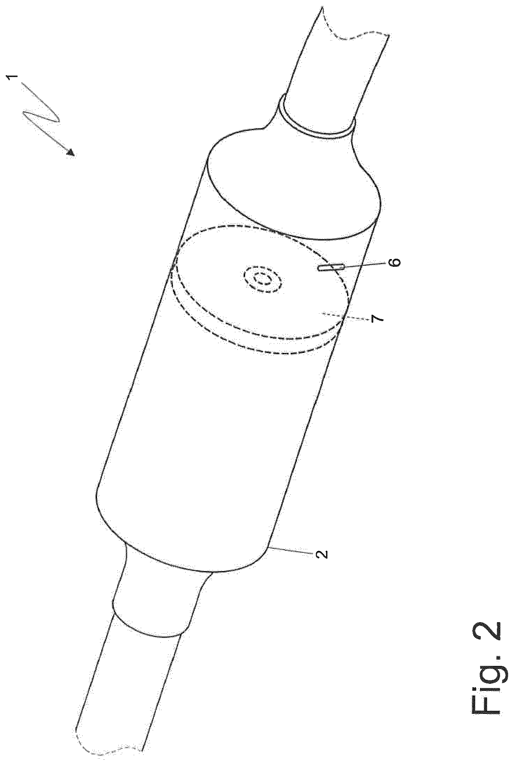

- Figure 2 is a perspective and schematic view of the treatment device of Figure 1;
- Figure 3 is a perspective view of a static mixer of the treatment device of Figure 1;
- Figure 4 is an exploded view of the static mixer of Figure 3.

### PREFERRED EMBODIMENTS OF THE INVENTION

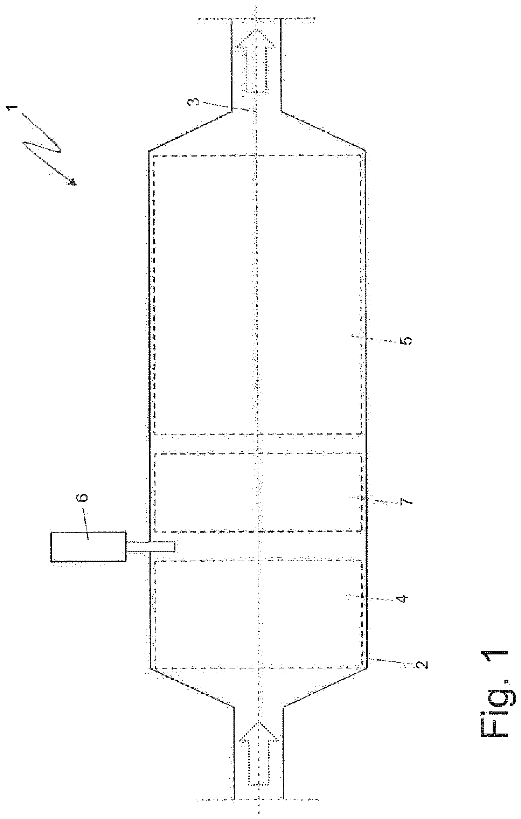

In Figure 1, number 1 indicates as a whole an exhaust gas treatment device for an exhaust system of an internal combustion engine, preferably operating according to the "Diesel" cycle (i.e. supplied with diesel fuel or the like).

The exhaust gas treatment device 1 comprises a tubular housing 2, which is made of metal and has a longitudinal central shaft 3. The tubular housing 2 houses an oxidizing catalyst 4 arranged in the front position (namely the first to be crossed by the exhaust gas) and an SCR (Selective Catalytic Reduction) catalyst 5 for the post-treatment of the NOₓ molecules (NO and NO₂) arranged in the rear position (namely the last to be crossed by the exhaust gas) .

An injector 6 is arranged between the oxidizing catalyst 4 and the SCR catalyst 5, said injector being adapted to inject in the tubular housing 2 a reductant, in particular an aqueous urea solution (i.e. a solution of urea and water); in use, due to the heat of the exhaust gas in the tubular housing 2, the urea spontaneously decomposes into isocyanic acid (HNCO) and ammonia (NH₃), which acts as a reducing agent within the SCR catalyst 5 to facilitate the decomposition reaction of the NOₓ molecules in nitrogen (N2) and water (H2O).

The tubular housing 2 houses a static mixer 7 arranged between the injector 6 (namely downstream of the injector 6 with respect to the flow of exhaust gas) and the SCR catalyst 5 (namely upstream of the SCR catalyst 5 with respect to the flow of exhaust gas). The static mixer 7 generates turbulence in the exhaust gas in the tubular housing 2 so as to prevent the localized densification of the isocyanic acid formed during the urea decomposition and the polymerization of the isocyanic acid, and also to increase the efficiency of the SCR catalyst 5 making more homogeneous the ammonia dispersion in the exhaust gas. According to a preferred (but not limiting) embodiment, the SCR catalyst 5 also incorporates a particulate filter.

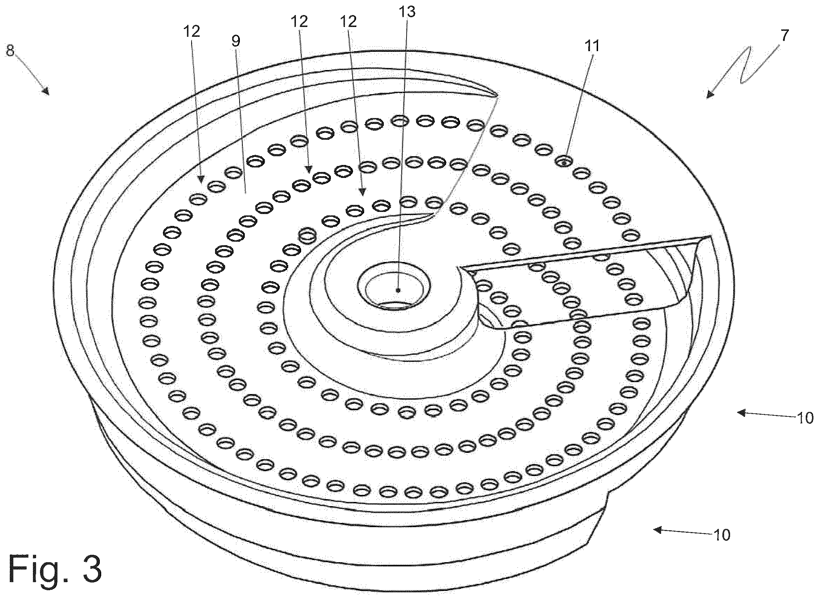

As shown in Figure 3, the static mixer 7 comprises a tubular support body 8 coaxial with the tubular housing 2 (i.e. having the same longitudinal central axis 3 of the tubular housing 2) and fixed (typically welded or riveted) to a side wall of the tubular housing 2. Furthermore, the static mixer 7 comprises a helical element 9, which is helically twisted about the longitudinal central axis 3 forming a helical path, which must be followed by the exhaust gas passing through the static mixer 7.

Preferably, the helical element 9 is helically twisted about the longitudinal central axis 3 with a winding angle comprised between 540° and 720°; in other words, the helical element 9 is helically twisted about the longitudinal central axis 3 completing more than one and a half and less than two turns. According to an alternative embodiment not shown, the helical element 9 is helically twisted about the longitudinal central axis 3 with a winding angle smaller than 540° (but still larger than 360°) or with a winding angle larger than 720°.

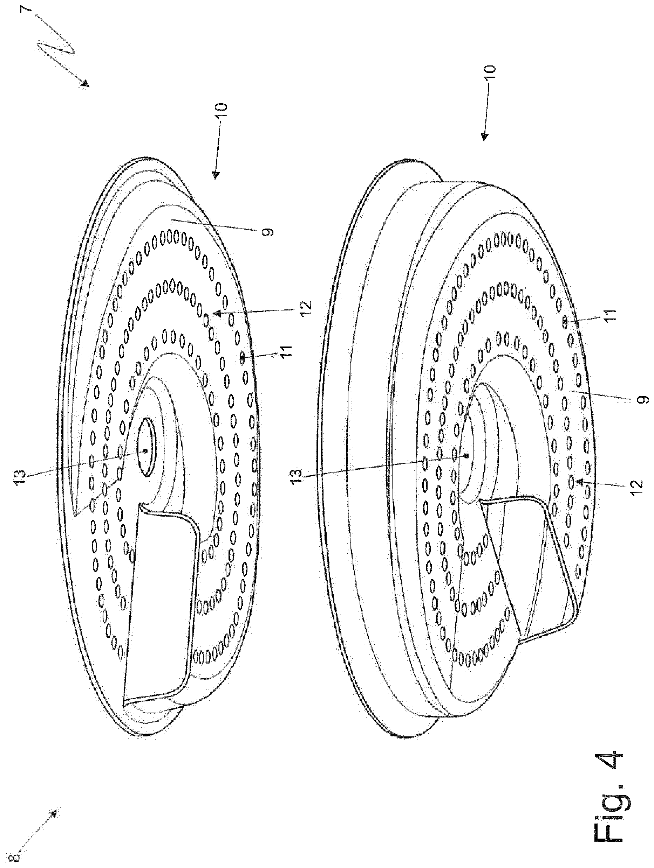

As shown in Figure 4, the static mixer 7 comprises two cup-shaped bodies 10, which are superposed and joined together (e.g. welded). Each cup-shaped body 10 may be manufactured by moulding a flat sheet and comprises a corresponding part of the helical element 9. In other words, the static mixer 7 is formed by the union of two cup-shaped bodies 10, each including a corresponding part of the helical element 9. When the helical element 9 is helically twisted about the longitudinal central axis 3 with a winding angle larger than 720°, then the static mixer 7 is formed by the union of three (or more) cup-shaped bodies 10.

As shown in Figures 3 and 4, the helical element 9 comprises a plurality of through holes 11, which are arranged along three rows 12, which are mutually parallel and spaced apart, each of them being helically twisted about the longitudinal central axis 3 following the shape of the helical element 9. In other words, the through holes 11 are grouped in three rows 12 (mutually parallel and spaced apart), each of which is composed by an orderly succession of evenly distributed through holes 11 and follows (forms) a helical line which is helically twisted about the longitudinal central axis 3 following the shape of the helical element 9.

According to a possible embodiment, along each row 12 the through holes 11 have a constant step (i.e. a mutual distance); alternatively, along each row 12 the through holes 11 have a variable step (i.e. a mutual distance) (e.g. the step may increase and decrease more or less irregularly along the row 12).

In the preferred embodiment shown in the attached figures, the helical element 9 comprises three rows 12 of through holes 11; according to alternative embodiments not shown, the helical element 9 includes only two rows 12 of through holes 11 (generally having a larger diameter) or comprises four or five rows 12 of through holes 11 (generally having a smaller diameter).

In the preferred embodiment shown in the attached figures, the through holes 11 are oriented longitudinally (namely, parallel to the longitudinal central axis 3); accordingly, each through hole 11 forms an angle which is not a right angle with the helical element 9. This latter, being helically wrapped about the longitudinal central axis 3, is never perpendicular to the longitudinal central axis 3. According to an alternative embodiment, the through holes 11 are oriented perpendicularly with respect to the helical element 9 and therefore are not parallel to the longitudinal central axis 3.

In the preferred embodiment shown in the attached figures, all through holes 11 have the same diameter; according to alternative embodiments not shown, the through holes 11 may have different diameters (the diameters of the through holes 11 may be different in the same row 12 and/or in the rows 12). By way of example, the through holes 11 may have a diameter comprised between 2 and 5 mm. The helical element 9 comprises a through hole 13 which is oriented longitudinally (namely parallel to the longitudinal central axis 3), is centrally arranged (thus being also coaxial with the longitudinal central axis 3) and has a diameter larger than all the through holes 11. By way of example, the through hole 13 may have a diameter comprised between 8 and 20 mm (therefore the through hole 13 has a diameter that is at least 4-6 times the diameter of the through holes 11). The injector 6 is arranged upstream of the static mixer 7 with respect to the flow of exhaust gas, and then the reductant is injected in the exhaust gas before the exhaust gas contacts the static mixer 7 or contacts the helical element 9 of the static mixer 7.

In use, the exhaust gas can pass through the static mixer 7 in three different ways: by following the helical path imposed by the helical element 9, by passing through the through holes 11 or by passing through the through hole 13; each of these three paths imparts on the exhaust gas different whirling motions, which synergistically combine thus resulting in a good mixing of the exhaust gas. In other words, the whirling motions imparted by the three possible paths of the exhaust gas (helical element 9, through holes 11, through hole 13) combine with each other thus increasing the total mixing effect well beyond the sum of the mixing effects obtained by using, with an equal counterpressure (namely with equal pressure losses), the three separate paths of the exhaust gas (i.e. in series, one after the other).

The aforesaid static mixer 7 has numerous advantages, since it is simple and inexpensive to manufacture, is particularly tough (therefore having a long service life and a very low risk of fractures) and especially has an optimal balance between the conflicting requirements relating to efficacy (i.e. ensuring an adequate mixing of the exhaust gas) and efficiency (i.e. limiting the load losses in the exhaust gas). In other words, the aforesaid static mixer 7 has at the same time a high efficacy (i.e. it ensures an adequate mixing of the exhaust gas) and a high efficiency (i.e. it limits the load losses in the exhaust gas).

## Claims

1. An exhaust gas treatment device (1) for an exhaust system of an internal combustion engine; the treatment device (1) comprises:
a tubular housing (2), which has a longitudinal central axis (3); and
a static mixer (7), which is arranged inside the tubular housing (2) and comprises a helical element (9), which is helically twisted about the longitudinal central axis (3) and comprises at least two rows (12) of first through holes (11), which are mutually spaced;
wherein the two rows (12) of first through holes (11) are parallel and spaced apart, each of them being helically twisted about the longitudinal central axis (3) following the shape of the helical element (9); and
wherein there are provided two separate cup-shaped bodies (10), which are superposed, each of them comprising a corresponding part of the helical element (9);
the treatment device (1) is **characterized in that** the helical element (9) comprises a second through hole (13) which is longitudinally oriented, is centrally arranged and has a diameter larger than the first through holes (11).

2. An exhaust gas treatment device (1) according to claim 1, wherein the helical element (9) comprises three rows (12) of first through holes (11).

3. An exhaust gas treatment device (1) according to claim 1 or 2, wherein the first through holes (11) all have the same diameter.

4. An exhaust gas treatment device (1) according to claim 1, 2 or 3, wherein the helical element (9) is helically twisted about the longitudinal central axis (3) with a winding angle ranging from 540° to 720°.

5. An exhaust gas treatment device (1) according to any one of claims from 1 to 4, wherein the first through holes (11) are longitudinally oriented.

6. An exhaust gas treatment device (1) according to any one of claims from 1 to 5 and comprising:
a SCR catalytic converter (9), which is arranged in the tubular housing (2) downstream of the static mixer (7); and
an injector (6), configured to inject an additive in the tubular housing and is arranged in the tubular housing upstream of the static mixer (7).

7. An exhaust gas treatment device (1) according to claim 6, wherein the injector (6) is configured to inject the additive upstream of the helical element (9) of the static mixer (7).

## Patentansprüche

1. Abgasbehandlungsvorrichtung (1) für ein Abgassystem einer Brennkraftmaschine; wobei die Behandlungsvorrichtung (1) Folgendes umfasst:
ein rohrförmiges Gehäuse (2), das eine zentrale Längsachse (3) aufweist; und
einen statischen Mischer (7), der innerhalb des rohrförmigen Gehäuses (2) angeordnet ist und ein spiralförmiges Element (9) aufweist, das spiralförmig um die zentrale Längsachse (3) gewunden ist, und mindestens zwei Reihen (12) erster Durchgangslöcher (11) umfasst, die gegenseitig voneinander beabstandet sind;
wobei die zwei Reihen (12) der ersten Durchgangslöcher (11) parallel und voneinander beabstandet sind, wobei jedes von ihnen spiralförmig um die zentrale Längsachse (3) gewunden ist und der Form des spiralförmigen Elementes (9) folgt; und
wobei zwei separate becherförmige Körper (10) zur Verfügung gestellt sind, die überlagernd sind, wobei jedes von ihnen einen entsprechenden Teil des spiralförmigen Elementes (9) umfasst;
wobei die Behandlungsvorrichtung (1) **dadurch gekennzeichnet ist, dass** das spiralförmige Element (9) ein zweites Durchgangsloch (13) umfasst, das in Längsrichtung ausgerichtet ist, zentral angeordnet ist und einen Durchmesser aufweist, der größer als die ersten Durchgangslöcher (11) ist.

2. Abgasbehandlungsvorrichtung (1) nach Anspruch 1, wobei das spiralförmige Element (9) drei Reihen (12) der ersten Durchgangslöcher (11) umfasst.

3. Abgasbehandlungsvorrichtung (1) nach Anspruch 1 oder 2, wobei die ersten Durchgangslöcher (11) alle denselben Durchmesser aufweisen.

4. Abgasbehandlungsvorrichtung (1) nach Anspruch 1, 2 oder 3, wobei das spiralförmige Element (9) spiralförmig mit einem Windungswinkel im Bereich von 540° bis 720° um die zentrale Längsachse (3) gewunden ist.

5. Abgasbehandlungsvorrichtung (1) nach einem der Ansprüche 1 bis 4, wobei die ersten Durchgangslöcher (11) in Längsrichtung ausgerichtet sind.

6. Abgasbehandlungsvorrichtung (1) nach einem der Ansprüche 1 bis 5 und umfassend:
einen katalytischen SCR-Wandler (9), der in dem rohrförmigen Gehäuse (2) stromabwärts des statischen Mischers (7) angeordnet ist; und
einen Injektor (6), der dafür konfiguriert ist, einen Zusatzstoff in das rohrförmige Gehäuse einzuspritzen und in dem rohrförmigen Gehäuse stromaufwärts des statischen Mischers (7) angeordnet ist.

7. Abgasbehandlungsvorrichtung (1) nach Anspruch 6, wobei der Injektor (6) dafür konfiguriert ist, den Zusatzstoff stromaufwärts des spiralförmigen Elementes (9) des statischen Mischers (7) einzuspritzen.

## Revendications

1. Dispositif de traitement de gaz d'échappement (1) pour un système d'échappement d'un moteur à combustion interne ; le dispositif de traitement (1) comprend :
un boîtier tubulaire (2), qui a un axe central longitudinal (3) ;
un mélangeur statique (7), qui est agencé à l'intérieur du boîtier tubulaire (2) et comprend un élément hélicoïdal (9), qui est enroulé hélicoïdalement autour de l'axe central longitudinal (3) et comprend au moins deux rangées (12) de premiers orifices traversants (11), qui sont mutuellement espacés ;
dans lequel les deux rangées (12) de premiers orifices traversants (11) sont parallèles et espacées l'une de l'autre, chacune d'elles étant enroulée hélicoïdalement autour de l'axe central longitudinal (3) en suivant la forme de l'élément hélicoïdal (9) ; et
dans lequel sont fournis deux corps séparés en forme de coupelle (10), qui sont superposés, chacun d'eux comprenant une partie correspondante de l'élément hélicoïdal (9) ;
le dispositif de traitement (1) est **caractérisé en ce que** l'élément hélicoïdal (9) comprend un second orifice traversant (13) qui est orienté longitudinalement, est agencé centralement et a un diamètre plus grand que les premiers orifices traversants (11).

2. Dispositif de traitement de gaz d'échappement (1) selon la revendication 1,
dans lequel l'élément hélicoïdal (9) comprend trois rangées (12) de premiers orifices traversants (11).

3. Dispositif de traitement de gaz d'échappement (1) selon la revendication 1 ou 2, dans lequel les premiers orifices traversants (11) ont tous le même diamètre.

4. Dispositif de traitement de gaz d'échappement (1) selon la revendication 1, 2 ou 3, dans lequel l'élément hélicoïdal (9) est enroulé hélicoïdalement autour de l'axe central longitudinal (3) avec un angle d'enroulement compris entre 540° et 720°.

5. Dispositif de traitement de gaz d'échappement (1) selon l'une quelconque des revendications 1 à 4, dans lequel les premiers orifices traversants (11) sont orientés longitudinalement.

6. Dispositif de traitement de gaz d'échappement (1) selon l'une quelconque des revendications 1 à 5 et comprenant :
un catalyseur SCR (9), qui est agencé dans le boîtier tubulaire (2) en aval du mélangeur statique (7) ; et
un injecteur (6), configuré pour injecter un additif dans le boîtier tubulaire et est agencé dans le boîtier tubulaire en amont du mélangeur statique (7).

7. Dispositif de traitement de gaz d'échappement (1) selon la revendication 6, dans lequel l'injecteur (6) est configuré pour injecter l'additif en amont de l'élément hélicoïdal (9) du mélangeur statique (7).
